# EUROPEAN PATENT APPLICATION

(11) **EP 4 711 604 A1**
(43) Date of publication of application: **18.03.2026**
(21) Application number: 25198418.3
(22) Date of filing: 27.08.2025
(51) Int. Cl.: F02D 19/06, F02D 41/00, F02D 19/08, F02D 41/30, F02D 41/40

(54) **A METHOD FOR OPERATING A DUAL FUEL INTERNAL COMBUSTION ENGINE A DUAL FUEL INTERNAL COMBUSTION ENGINE AND A VEHICLE**

(30) Priority: 13.09.2024 EP 24200379
(71) Applicant: Volvo Penta Corporation, 405 08 Göteborg (SE)
(72) Inventor: LANDBERG, Patrik, 414 76 GÖTEBORG (SE); HEMDAL, Stina, 417 28 GÖTEBORG (SE); LINDGREN, Ronny, 436 44 GÖTEBORG (SE); KAGGANAGADDE SHANKAREGOWDA, Prajwal, 417 17 GÖTEBORG (SE)
(74) Representative: Kransell & Wennborg KB

(57) **Abstract**

The disclosure relates to a method for operating a dual fuel internal combustion engine (1), the dual fuel internal combustion engine (1) comprising:
- a cylinder (2) and a piston (3), the cylinder and the piston at least partially defining a combustion chamber (7),
- an air intake system (4) arranged to provide air into the combustion chamber (7),
- a first fuel injector (5) arranged to inject a first fuel into the combustion chamber (7),
- a second fuel injector (6) arranged to inject a second fuel into the air intake system (4),
wherein the method comprises: injecting (S1) the second fuel into the air intake system (4) and injecting (S2) the first fuel into the combustion chamber (7). The disclosure also relates to a dual fuel internal combustion engine system (10) and a vehicle (100).

## Description

### TECHNICAL FIELD

The disclosure relates generally to internal combustion engines. In particular aspects, the disclosure relates to a method for operating a dual fuel internal combustion engine, a dual fuel internal combustion engine, and a vehicle. The disclosure can be applied to heavy-duty vehicles, such as trucks, buses, and construction equipment, among other vehicle types. The disclosure can also be applied to other vehicles, such as marine vessels. The disclosure can also be applied to stationary internal combustion engines. Although the disclosure may be described with respect to a particular vehicle, the disclosure is not restricted to any particular vehicle.

### BACKGROUND

Internal combustion engines commonly use gasoline or diesel as fuel. However, there is a desire to operate internal combustion engines with more sustainable fuels to thereby reduce the environmental impact. Hence, there is a strive to develop improved technology relating to internal combustion engines which use more sustainable fuels. For example, there is a desire to develop improved technology relating to internal combustion engines which results in that an appropriate amount of sustainable fuel is used during operation.

### SUMMARY

According to a first aspect of the disclosure, a method for operating a dual fuel internal combustion engine is provided. The dual fuel internal combustion engine comprises:
- a cylinder and a piston at least partially accommodated by the cylinder, wherein the piston is arranged to reciprocate within and relative to the cylinder between a top dead center and a bottom dead center, the cylinder and the piston at least partially defining a combustion chamber,
- an air intake system arranged to provide air into the combustion chamber,
- a first fuel injector arranged to inject a first fuel into the combustion chamber,
- a second fuel injector arranged to inject a second fuel into the air intake system.
The method comprises:
- during and/or prior to an intake phase when the piston is moving from the top dead center to the bottom dead center, injecting the second fuel into the air intake system by the second fuel injector such that at least a mixture of air and the second fuel is provided into the combustion chamber from the air intake system during the intake phase, wherein the second fuel is an alcohol fuel, and
- during a compression phase following the intake phase when the piston is moving from the bottom dead center to the top dead center, injecting the first fuel into the combustion chamber by the first fuel injector in at least two separate fuel injections, comprising a main injection and at least one pilot injection, wherein the at least one pilot injection is injected prior to the main injection during the compression phase, wherein the first fuel is a fuel with a higher cetane number than the second fuel, and wherein the fuel injections by the first fuel injector during the compression phase are initiated in a crank angle window from -60 degrees (°) to 0° with respect to the top dead center. The first aspect of the disclosure may seek to provide an improved method for operating a dual fuel internal combustion engine which results in that a larger amount of the second fuel is used during operation. For example, a larger amount of the second fuel may be used during operation while maintaining or improving combustion efficiency and/or while mitigating unwanted engine emissions. A technical benefit may include that the at least one pilot injection of the first fuel results in increased combustion efficiency, reduced engine knock, and/or reduced hydrocarbon emissions, in particular reduced aldehyde emissions, such as reduced formaldehyde emissions, as compared to e.g. a method without the at least one pilot injection of the first fuel. The first fuel, which has a higher cetane number than the second fuel, is compression ignited by the high temperature in the combustion chamber during operation. The combustion of the first fuel will result in that the second fuel is combusted. The first fuel is injected into the combustion chamber during the compression phase so that diffusion combustion is primarily performed. This is for example achieved due to the timing of the fuel injections of the first fuel, e.g., by the fuel injections in the herein disclosed crank angle window. Hence, by the present disclosure, increased combustion efficiency, reduced engine knock, and/or reduced hydrocarbon emissions may be achieved for an internal combustion engine which utilizes compression ignition with diffusion combustion as the primary combustion type in the combustion chamber. In some examples, such internal combustion engine may be denoted a diesel engine. By the at least one pilot injection as disclosed herein, combustion of the second fuel may be improved, thereby mitigating unwanted hydrocarbon emissions, such as formaldehyde or any other aldehyde. Additionally, or alternatively, by the at least one pilot injection as disclosed herein, engine knock may be mitigated. As a result of the aforementioned benefits, a larger amount of the second fuel may be used during operation, thereby resulting in a more sustainable use of the internal combustion engine. As another result of the aforementioned benefits, an exhaust aftertreatment system provided downstream of the internal combustion engine may be reduced in size. Accordingly, in some examples, a more cost-effective configuration may be achieved.

Optionally in some examples, including in at least one preferred example, a compression ratio of the combustion chamber is at least 16 to 1. A technical benefit may include that an appropriate amount of diffusion combustion is occurring in the combustion chamber. This may result in a more controlled combustion process, e.g., in contrast to homogenous charge compression ignition (HCCI) which may be considered as a more chaotic combustion process.

Optionally in some examples, including in at least one preferred example, the at least one pilot injection comprises a first pilot injection, and the first pilot injection is initiated at a crank angle with respect to the top dead center which is in the range of -60° to -30°. A technical benefit may include that the first pilot injection is performed such that the lambda of the second fuel and air mixture in the combustion chamber is appropriately low. This may result in reduced unburned hydrocarbon emissions exiting the combustion chamber during operation. This may also result in reduced NOx emissions. For example, a reduction in aldehyde emissions caused by the second fuel may be achieved, such as a reduction in formaldehyde emissions when the second fuel is e.g. methanol.

Optionally in some examples, including in at least one preferred example, the at least one pilot injection comprises a second pilot injection, and the second pilot injection is initiated at a crank angle with respect to the top dead center which is in the range of -30° to 0°, such as -30° to -10°, or -20° to -10°. A technical benefit may include that the second pilot injection is performed such that any ignition delay is reduced, thereby resulting in a less rapid pressure increase in the combustion chamber. This may result in a reduced risk of engine knock and/or ringing, and thereby an appropriately large amount of second fuel may be used. The first pilot injection as disclosed herein is preferably performed prior to the second pilot injection and prior to the main injection. The second pilot injection as disclosed herein is preferably performed prior to the main injection and after the first pilot injection.

Optionally in some examples, including in at least one preferred example, the dual fuel internal combustion engine further comprises an air intake valve arranged to selectively open and close fluid communication between the air intake system and the combustion chamber, wherein the air intake valve is located between the air intake system and the combustion chamber in an intended direction of flow of air from the air intake system to the combustion chamber, and wherein injecting the second fuel into the air intake system by the second fuel injector comprises injecting the second fuel into the air intake system upstream of the air intake valve by the second fuel injector.

Optionally in some examples, including in at least one preferred example, the second fuel is any one of methanol, ethanol, butanol, or any mixture thereof. A technical benefit may include that an appropriately sustainable fuel is used for operating the internal combustion engine. By way of example, if methanol is used as the second fuel, unwanted formaldehyde emissions may be reduced.

Optionally in some examples, including in at least one preferred example, the first fuel is any one of diesel, bio-diesel, HVO-diesel (Hydrotreated vegetable oil diesel), DME fuel (Dimethyl ether), or any mixture thereof. A technical benefit may include that a fuel with a high cetane number is used, thereby resulting in efficient compression ignition during operation.

Optionally in some examples, including in at least one preferred example, the main injection is initiated by the first fuel injector at a crank angle with respect to the top dead center which is in the range of -45° to 0°, such as -30° to 0°, or -15° to 0°. A technical benefit may include that the main injection is initiated close to the top dead center, i.e., late during the compression phase. This may result in improved combustion, e.g., improved diffusion combustion. By way of example, this may result in a more controlled combustion process, e.g., in contrast to homogenous charge compression ignition (HCCI) which may be considered as a more chaotic combustion process.

Optionally in some examples, including in at least one preferred example, a total amount of first fuel injected during the main injection by the first fuel injector corresponds to or is larger than a total amount of first fuel injected during one single pilot injection of the at least one pilot injection. A technical benefit may include that the size of the main injection is sufficient for achieving an efficient combustion of the first and second fuels.

Optionally in some examples, including in at least one preferred example, a minimum total amount of first fuel injected during the main injection by the first fuel injector is in the range of 2-10 mg. A technical benefit may include that the size of the main injection is sufficient for achieving an efficient combustion of the first and second fuels.

Optionally in some examples, including in at least one preferred example, the first fuel injected during the main injection is injected by the first fuel injector at an injection pressure in the range of 300-2500 bar, preferably 500-1500 bar. A technical benefit may include that an appropriate pressure level is used for achieving efficient combustion of the first and second fuels.

Optionally in some examples, including in at least one preferred example, the at least one pilot injection comprises a first pilot injection, and wherein a first time period defined by an end of the first pilot injection and an initiation of the main injection is in the range of 1000-6000 µs. A technical benefit may include that the first pilot injection is performed such that the lambda of the second fuel and air mixture in the combustion chamber is appropriately low. This may result in reduced unburned hydrocarbon emissions exiting the combustion chamber during operation. This may also result in reduced NOx emissions. For example, a reduction in aldehyde emissions caused by the second fuel may be achieved, such as a reduction in formaldehyde emissions when the second fuel is e.g. methanol.

Optionally in some examples, including in at least one preferred example, a total amount of first fuel injected during the first pilot injection is in the range of 2-8 mg. A technical benefit may include that an appropriate amount of first fuel is injected during the first pilot injection, e.g., such that the lambda of the second fuel and air mixture in the combustion chamber is reduced.

Optionally in some examples, including in at least one preferred example, the at least one pilot injection comprises a second pilot injection, and a second time period defined by an end of the second pilot injection and an initiation of the main injection is in the range of 100-800 µs, such as 200-500 µs or 300-500 µs. A technical benefit may include that the second pilot injection is performed such that any ignition delay is reduced, thereby resulting in a less rapid pressure increase in the combustion chamber. This may result in a reduced risk of engine knock and/or ringing, and thereby an appropriately large amount of second fuel may be used.

Optionally in some examples, including in at least one preferred example, a total amount of first fuel injected during the second pilot injection is in the range of 1-5 mg, such as 2-3 mg. A technical benefit may include that an appropriate amount of first fuel is injected during the second pilot injection, e.g., such that a less rapid pressure increase in the combustion chamber is achieved.

Optionally in some examples, including in at least one preferred example, a ratio between a total amount of first fuel injected during the first pilot injection and a total amount of first fuel injected during the second pilot injection is in a range of 1-4. A technical benefit may include that an appropriate balance of first fuel injected during the two pilot injections is achieved, e.g. resulting in that a larger amount of second fuel can be used.

Optionally in some examples, including in at least one preferred example, the injections performed during the intake phase and the following compression phase define an injection phase, and wherein a total amount of second fuel injected during the injection phase amounts to at least 20 weight (wt)% of a total amount of first and second fuel injected during the injection phase, such as at least 25 wt% or at least 30 wt%. A technical benefit may include that a large amount of second fuel is used, thereby resulting in a more sustainable engine operation while still achieving an efficient combustion with a reduced amount of emitted unburned hydrocarbons.

Optionally in some examples, including in at least one preferred example, the first fuel is injected by the first fuel injector at a higher injection pressure during each one of the main injection and the at least one pilot injection than an injection pressure of the second fuel by the second fuel injector. A technical benefit may include that the first and second fuels are injected at an appropriate injection pressure resulting in efficient combustion with a reduced amount of emitted unburned hydrocarbons.

Optionally in some examples, including in at least one preferred example, the dual fuel internal combustion engine is arranged to receive exhaust gas into the air intake system from an exhaust gas recirculation system, and the method comprises, during and/or prior to the intake phase, injecting the second fuel into the air intake system by the second fuel injector such that a mixture of air, exhaust gas and the second fuel is provided into the combustion chamber from the air intake system during the intake phase. A technical benefit may include that hot exhaust gases from the exhaust gas recirculation system may help increase the temperature in the combustion chamber which could promote flame propagation into "over lean" areas. Thereby, the amount of first fuel in the main injection may be reduced.

According to a second aspect of the disclosure, a dual fuel internal combustion engine system comprising a dual fuel internal combustion engine and a control unit is provided. The dual fuel internal combustion engine comprises:
- a cylinder and a piston at least partially accommodated by the cylinder, wherein the piston is arranged to reciprocate within and relative to the cylinder between a top dead center and a bottom dead center, the cylinder and the piston at least partially defining a combustion chamber,
- an air intake system arranged to provide air into the combustion chamber,
- a first fuel injector arranged to inject a first fuel into the combustion chamber,
- a second fuel injector arranged to inject a second fuel into the air intake system,
   wherein the control unit is configured to:
- during and/or prior to an intake phase when the piston is moving from the top dead center to the bottom dead center, inject the second fuel into the air intake system by the second fuel injector such that at least a mixture of air and the second fuel is provided into the combustion chamber from the air intake system during the intake phase, wherein the second fuel is an alcohol fuel, and
- during a compression phase following the intake phase when the piston is moving from the bottom dead center to the top dead center, inject the first fuel into the combustion chamber by the first fuel injector in at least two separate fuel injections, comprising a main injection and at least one pilot injection, wherein the at least one pilot injection is injected prior to the main injection during the compression phase, wherein the first fuel is a fuel with a higher cetane number than the second fuel, and wherein the fuel injections by the first fuel injector during the compression phase are initiated in a crank angle window from -60° to 0° with respect to the top dead center. The second aspect of the disclosure may seek to provide an improved dual fuel internal combustion engine which results in that a larger amount of the second fuel is used during operation. Advantages and benefits of the second aspect of the disclosure are analogous to the advantages and benefits of the first aspect of the disclosure. All examples of the first aspect of the disclosure are combinable with all examples of the second aspect of the disclosure.

Optionally in some examples, including in at least one preferred example, the dual fuel internal combustion engine further comprises an air intake valve arranged to selectively open and close fluid communication between the air intake system and the combustion chamber, wherein the air intake valve is located between the air intake system and the combustion chamber in an intended direction of flow of air from the air intake system to the combustion chamber, and wherein the second fuel injector is arranged upstream of the air intake valve.

Optionally in some examples, including in at least one preferred example, the dual fuel internal combustion engine system further comprises an exhaust gas recirculation system which is arranged to provide exhaust gas into the air intake system. The control unit may be configured to: during and/or prior to the intake phase, inject the second fuel into the air intake system by the second fuel injector such that a mixture of air, exhaust gas and the second fuel is provided into the combustion chamber from the air intake system during the intake phase.

According to a third aspect of the disclosure, a vehicle comprising a dual fuel internal combustion engine system according to any one of the examples of the second aspect of the disclosure is provided. Advantages and benefits of the third aspect of the disclosure are analogous to the advantages and benefits of the first and second aspects of the disclosure.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

There are also disclosed herein computer systems, control units, code modules, computer-implemented methods, computer readable media, and computer program products associated with the above discussed technical benefits.

### BRIEF DESCRIPTION OF THE DRAWINGS

Examples are described in more detail below with reference to the appended drawings.
**FIG. 1** is an exemplary vehicle according to an example.
**FIG. 2** is an exemplary dual fuel internal combustion engine and dual fuel internal combustion engine system according to an example.
**FIG. 3** is an exemplary flowchart of a method according to an example.
**FIG. 4A** is an exemplary intake phase and compression phase of a dual fuel internal combustion engine according to an example.
**FIG. 4B** is an exemplary compression phase of a dual fuel internal combustion engine according to an example.
**FIG. 4C** is an exemplary compression phase of a dual fuel internal combustion engine according to an example.
**FIG. 4D** is an exemplary compression phase of a dual fuel internal combustion engine according to an example.
**FIG. 5** is a schematic diagram of an exemplary computer system for implementing examples disclosed herein, according to an example.

### DETAILED DESCRIPTION

The detailed description set forth below provides information and examples of the disclosed technology with sufficient detail to enable those skilled in the art to practice the disclosure.

An aim of the present disclosure is to provide an improved method for operating a dual fuel internal combustion engine and an improved dual fuel internal combustion engine system which result in that a larger amount of a more sustainable fuel is used during operation. For example, there is a desire to reduce the use of fossil fuels, such as gasoline and diesel. However, it has been realized that more sustainable fuels may in some examples also result in unwanted emissions, impaired engine operation and/or reduced engine efficiency. **In** particular, the present disclosure is based on an insight that when using an alcohol fuel in a dual fuel internal combustion engine, unwanted emissions, impaired engine operation and/or reduced engine efficiency may be mitigated. For example, by the at least one pilot injection as disclosed herein, combustion of the alcohol fuel may be improved, thereby mitigating unwanted hydrocarbon emissions, such as formaldehyde or any other aldehyde. Additionally, or alternatively, by the at least one pilot injection as disclosed herein, engine knock may be mitigated. As a result of the aforementioned benefits, a larger amount of the alcohol fuel may be used during operation, thereby resulting in a more sustainable use of the internal combustion engine. As another result of the aforementioned benefits, an exhaust aftertreatment system provided downstream of the internal combustion engine may be reduced in size. Accordingly, in some examples, a more cost-effective configuration may be achieved.

Additionally, or alternatively, an aim of the present disclosure is to provide an improved method for operating a dual fuel internal combustion engine in which a partially pre-mixed combustion (PPC) is performed, i.e., a combustion process including pre-mixed combustion, but where the combustion is primarily driven by diffusion combustion.

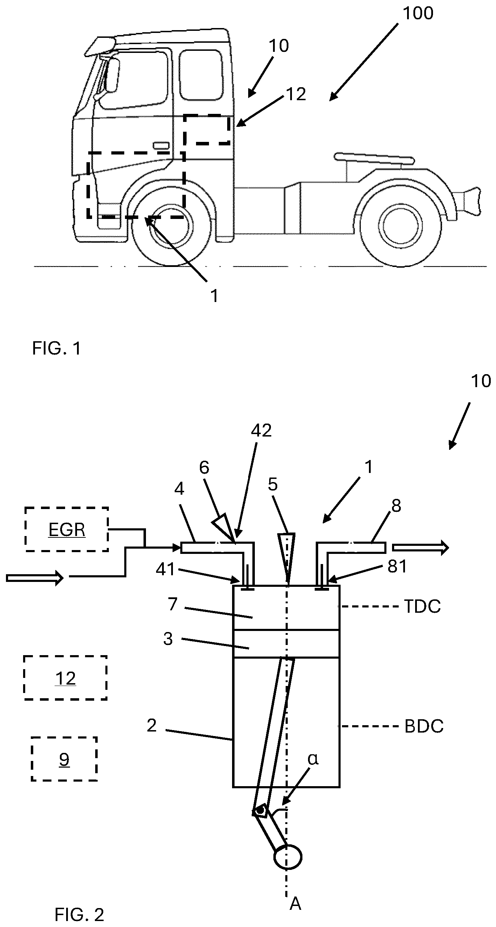

**FIG. 1** is an exemplary vehicle 100 in a side view according to an example. The vehicle 100 is in this example a truck, and more specifically a towing truck for towing one or more trailers (not shown). It shall however be noted that any other vehicle may be used, such as a marine vessel, a bus, a passenger car, etc. The vehicle 100 comprises an internal combustion engine system 10. The internal combustion engine system 10 comprises a dual fuel internal combustion engine 1 and a control unit 12. The control unit 12 may be an electronic control unit, such as an MECU (motor electronic control unit). The dual fuel internal combustion engine 1 is arranged to drive the vehicle 100.

**FIG. 2** is a schematic view of a dual fuel internal combustion engine system 10 according to an example. For example, the internal combustion engine system 10 in FIG. 2 may be the internal combustion engine system 10 in FIG. 1.

The dual fuel internal combustion engine system 10 comprises a dual fuel internal combustion engine 1. It may also as shown comprise a control unit 12 (indicated by a dashed box). The control unit 12 is preferably configured to control operation of the dual fuel internal combustion engine 1, e.g., according to examples of the method as disclosed herein.

The dual fuel internal combustion engine 1 comprises a cylinder 2 and a piston 3 at least partially accommodated by the cylinder 2. The piston 3 is arranged to reciprocate within and relative to the cylinder 2 between a top dead center TDC and a bottom dead center BDC. The cylinder 2 and the piston 3 at least partially define a combustion chamber 7. As shown, the piston 3 is preferably arranged to reciprocate along a center axis A of the cylinder 2.

In the shown example, one cylinder 2 is depicted. It shall however be noted that the dual fuel internal combustion engine typically comprises a plurality of cylinders, such as 4, 6, 8 or more cylinders.

The dual fuel internal combustion engine 1 further comprises an air intake system 4 arranged to provide air into the combustion chamber 7. The air intake system 4 may for example be an air intake manifold of the internal combustion engine 1.

The dual fuel internal combustion engine 1 further comprises a first fuel injector 5 arranged to inject a first fuel into the combustion chamber 7. In the shown example, the first fuel injector 5 is arranged to inject a first fuel directly into the combustion chamber 7.

The dual fuel internal combustion engine 1 further comprises a second fuel injector 6 arranged to inject a second fuel into the air intake system 4. The second fuel injector 6 is preferably arranged to inject the second fuel in liquid phase into the air intake system 4.

As shown in FIG. 2, the dual fuel internal combustion engine 1 may further comprise an air intake valve 41 arranged to selectively open and close fluid communication between the air intake system 4 and the combustion chamber 7, wherein the air intake valve 41 is located between the air intake system 4 and the combustion chamber 7 in an intended direction of flow of air from the air intake system 4 to the combustion chamber 7.

The dual fuel internal combustion engine 1 may as shown also comprise at least one exhaust valve 81 for selectively open and close fluid communication between the combustion chamber 7 and an exhaust gas outlet system 8. The exhaust gas outlet system 8 may be fluidly connected to an exhaust aftertreatment system (not shown) for treating the exhaust gas before being emitted to an external environment.

As shown in FIG. 2, in some examples the dual fuel internal combustion engine 1 may be arranged to receive exhaust gas into the combustion chamber 7 from an exhaust gas recirculation system EGR during operation. In the shown example, exhaust gas is arranged to be provided into the air intake system 4 by the EGR.

The dual fuel internal combustion engine system 10 may further comprise a fuel source 9 of first fuel and second fuel. Accordingly, the fuel source 9 may be adapted to separately accommodate the first fuel and the second fuel, such as by two separate fuel tanks. The fuel source 9 is fluidly connected to the first fuel injector 5 such that the first fuel can be provided to the first fuel injector 5 and to the second fuel injector 6 such that the second fuel can be provided to the second fuel injector 6.

The dual fuel internal combustion engine 1 is preferably arranged so that a compression ratio of the combustion chamber 7 is at least 16 to 1 (16:1). This may ensure that an appropriate compression of the fuel and air mixture is achieved so that compression ignition is appropriately performed.

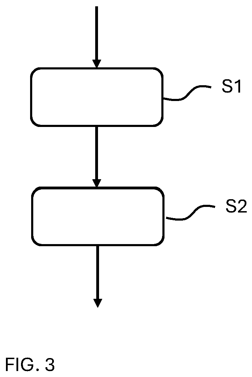

**FIG. 3** is a flowchart of a method for operating a dual fuel internal combustion engine 1 as e.g. shown in FIG. 2.

The method comprises:
- during and/or prior to an intake phase IP when the piston 3 is moving from the top dead center TDC to the bottom dead center BDC, injecting S1 the second fuel into the air intake system 4 by the second fuel injector 6 such that at least a mixture of air and the second fuel is provided into the combustion chamber 7 from the air intake system 4 during the intake phase, wherein the second fuel is an alcohol fuel. Injecting the second fuel into the air intake system 4 preferably means injecting the second fuel in liquid phase into the air intake system 4 by the second fuel injector 6 such that at least a mixture of air and the second fuel is provided into the combustion chamber 7 from the air intake system 4 during the intake phase. The second fuel is preferably injected during the intake phase, but may additionally or alternatively be injected prior to the intake phase, such as before the at least one valve 41 has opened the fluid communication with the combustion chamber 7. However, to reduce the risk of wall wetting in the air intake system 4, the second fuel is preferably injected during the intake phase.

The method further comprises:
- during a compression phase CP following the intake phase when the piston 3 is moving from the bottom dead center BDC to the top dead center TDC, injecting S2 the first fuel into the combustion chamber 7 by the first fuel injector 5 in at least two separate fuel injections, comprising a main injection MI and at least one pilot injection P1, P2, wherein the at least one pilot injection is injected prior to the main injection during the compression phase, wherein the first fuel is a fuel with a higher cetane number than the second fuel, and wherein the fuel injections by the first fuel injector 5 during the compression phase are initiated in a crank angle α window w1 from -60° to 0° with respect to the top dead center TDC.

Accordingly, the first fuel injector 5 does not inject any fuel during the compression phase until the crank angle α is -60° or less with respect to the top dead center TDC. This may ensure that the combustion process is primarily driven by diffusion combustion, in contrast to pre-mixed combustion.

During the compression phase the at least one air intake valve 41 is preferably closed. The at least one exhaust valve 81 is also preferably closed during the compression phase until it opens for letting out exhaust gas to the exhaust gas outlet system 8, for instance during a subsequent exhaust phase.

The first fuel, which has a higher cetane number than the second fuel, is compression ignited by the high temperature in the combustion chamber during operation. The combustion of the first fuel will result in that the second fuel is combusted. Accordingly, the dual fuel internal combustion engine 1 as disclosed herein is preferably configured as a compression ignition engine, also known as a diesel engine, in contrast to a spark ignition engine, such as gasoline engine, where the ignition is initiated by a spark plug.

In some examples, by the method as disclosed herein, the combustion process may be denoted partially pre-mixed combustion (PPC). This means that the combustion process includes pre-mixed combustion and diffusion combustion, but where the combustion is primarily driven by diffusion combustion.

Preferably, injecting S1 the second fuel into the air intake system 4 by the second fuel injector 6 comprises injecting S1 the second fuel, e.g., in liquid phase, into the air intake system 4 upstream of the air intake valve 41 by the second fuel injector 6.

The second fuel may be any one of methanol, ethanol, butanol, or any mixture thereof.

The first fuel may be any one of diesel, bio-diesel, HVO-diesel, DME fuel, or any mixture thereof.

The main injection may be initiated by the first fuel injector 5 at a crank angle α with respect to the top dead center TDC which is in the range of -45° to 0°, such as -30° to 0°, or -15° to 0°. In the shown example, the crank angle α from the top dead center TDC is measured with respect to the center axis A. By initiating the main injection in the aforementioned ranges, it may be ensured that the combustion is primarily driven by diffusion combustion.

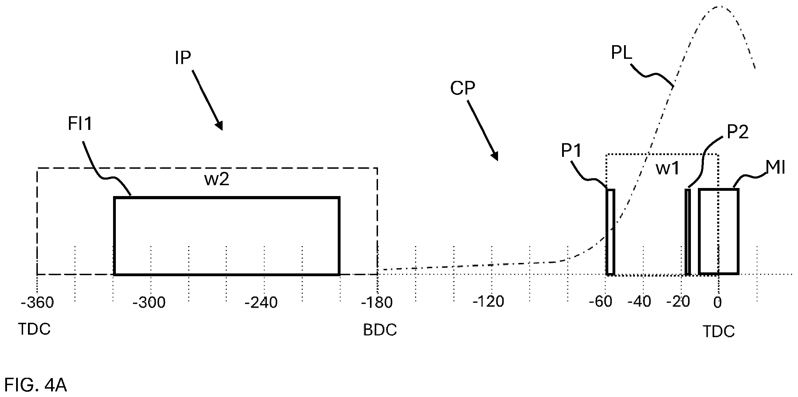

**FIG. 4A** is a schematic illustration of an exemplary intake phase IP and compression phase CP of a dual fuel internal combustion engine 1 according to an example. The intake phase IP occurs when the piston 3 is moving from the top dead center TDC to the bottom dead center BDC. The following compression phase CP occurs when the piston 3 is moving from the bottom dead center BDC to the top dead center TDC. The horizontal axis in FIG. 4A represents crank angle α, as also indicated in FIG. 2. The vertical axis may represent injection intensity, e.g., accomplished by an electric pulse to the respective fuel injector, and/or pressure level in the combustion chamber 7.

As mentioned in the above, during the compression phase CP, the first fuel injector 5 injects S2 the first fuel into the combustion chamber 7 in at least two separate fuel injections, comprising a main injection MI and at least one pilot injection P1, P2.

The fuel injections by the first fuel injector 5 during the compression phase CP are initiated in a crank angle α window w1 from -60° to 0° with respect to the top dead center TDC. As shown, the pressure level PL starts to increase rapidly when the crank angle α reaches -60°.

At least one injection FI1 of the second fuel may as shown be injected during the injection phase IP into the air intake system 4 by the second fuel injector 6 such that at least a mixture of air and the second fuel is provided into the combustion chamber 7 from the air intake system 4 during the intake phase. The second fuel is as mentioned in the above an alcohol fuel, such as methanol. In the shown example, the second fuel is injected in a crank angle range w2 of -360° to -180°. For example, as shown, the second fuel injector 6 may inject the second fuel when the crank angle α is from -320° to -200°.

By way of example, a total amount of first fuel injected during the main injection MI by the first fuel injector 5 may correspond to or be larger than a total amount of first fuel injected during one single pilot injection of the at least one pilot injection P1, P2. In the shown example, which may be indicated by the area size of the injections MI, P1, P2, the total amount of first fuel injected during the main injection MI by the first fuel injector 5 is larger than each one of the pilot injections P1, P2. For example, this situation may occur during high load conditions. However, as another example, a minimum total amount of first fuel injected during the main injection MI by the first fuel injector 5 may be in the range of 2-10 mg. Accordingly, the amount of first fuel injected during each main injection MI may vary depending on the current load condition.

The first fuel injected during the main injection MI may be injected by the first fuel injector 5 at an injection pressure in the range of 300-2500 bar, preferably 500-1500 bar.

The at least one pilot injection may as shown in FIG. 4A comprise a first pilot injection P1. Additionally, or alternatively, the at least one pilot injection may as shown in FIG. 4A comprise a second pilot injection P2. Even though any one of the first and second pilot injections P1, P2 may be performed without performing the other pilot injection, it has been realized that the combination of the first and second pilot injections may result in that a larger amount of the second fuel can be used. Hence, a more sustainable engine operation may thereby be achieved.

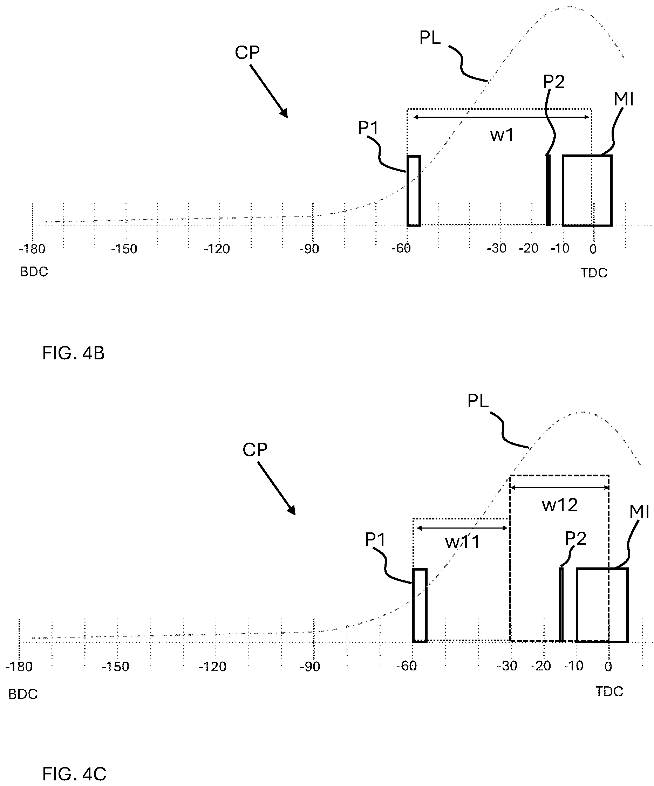

**FIG. 4B** is a schematic illustration of an exemplary compression phase CP of a dual fuel internal combustion engine 1 according to an example. The fuel injections by the first fuel injector 5 during the compression phase CP are initiated in a crank angle α window w1 from -60° to 0° with respect to the top dead center TDC. More specifically, in the shown example, a first pilot injection P1 is initiated at a crank angle α of -60°, a second pilot injection P2 is initiated at a crank angle α of -15°, and a main injection MI is initiated at a crank angle α of -10°. As indicated, the pressure level PL starts to increase rapidly when the crank angle α reaches -60°.

**FIG. 4C** is a schematic illustration of an exemplary compression phase CP of a dual fuel internal combustion engine 1 according to an example. In this example, the at least one pilot injection P1, P2 comprises a first pilot injection P1, and the first pilot injection P1 is initiated at a crank angle α with respect to the top dead center TDC which is in the range w11 of -60° to -30°. Further in this example, the at least one pilot injection P1, P2 comprises a second pilot injection P2, and the second pilot injection P2 is initiated at a crank angle α with respect to the top dead center TDC which is in the range w12 of -30° to 0°. For example, the crank angle α may be in the range of -30° to -10°, or -20° to -10°. Further in this example, the main injection MI is initiated by the first fuel injector 5 at a crank angle α with respect to the top dead center TDC which is in the range of -15° to 0°.

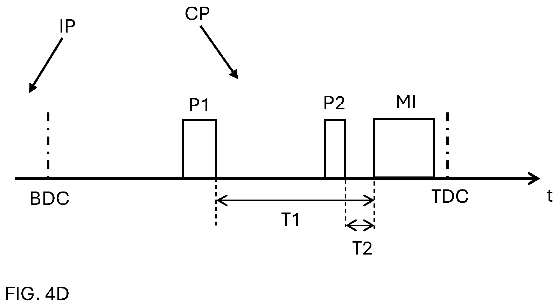

**FIG. 4D** is a schematic illustration of an exemplary intake phase IP and compression phase CP of a dual fuel internal combustion engine 1 according to an example. The intake phase IP occurs when the piston 3 is moving from the top dead center TDC to the bottom dead center BDC. The following compression phase CP occurs when the piston 3 is moving from the bottom dead center BDC to the top dead center TDC. In this example, the horizontal axis t in FIG. 4D represents time. The vertical axis may represent injection intensity, e.g., accomplished by an electric pulse to the respective fuel injector.

By way of example, a first time period T1 defined by an end of the first pilot injection P1 and an initiation of the main injection MI may be in the range of 1000-6000 µs. Additionally, or alternatively, a total amount of first fuel injected during the first pilot injection P1 may be in the range of 2-8 mg.

As another non-limiting example, a second time period T2 defined by an end of the second pilot injection P2 and an initiation of the main injection MI may be in the range of 100-800 µs, such as 200-500 µs or 300-500 µs. Additionally, or alternatively, a total amount of first fuel injected during the second pilot injection P2 may be in the range of 1-5 mg, such as 2-3 mg.

Generally, though by way of example only, the second pilot injection P2 occurs after the first pilot injection P1, e.g. such that the initiation of the second pilot injection P2 occurs after the termination of the first pilot injection P1.

By way of example, a ratio between a total amount of first fuel injected during the first pilot injection P1 and a total amount of first fuel injected during the second pilot injection P2 may be in a range of 1-4. Hence, and purely by way of example, if a total amount of first fuel injected during the second pilot injection P2 is 2 mg, a total amount of first fuel injected during the first pilot injection P1 may be in the range of 2-8 mg.

The injections performed during the intake phase IP and the following compression phase CP may define an injection phase. By way of example, a total amount of second fuel injected during the injection phase may amount to at least 20 wt% of a total amount of first and second fuel injected during the injection phase, such as at least 25 wt% or at least 30 wt%.

The first fuel may be injected by the first fuel injector 5 at a higher injection pressure during each one of the main injection MI and the at least one pilot injection P1, P2 than an injection pressure of the second fuel by the second fuel injector 6.

In view of the above mentioned exhaust gas recirculation system EGR, the method may comprise: during and/or prior to the intake phase IP, injecting S1 the second fuel into the air intake system 4 by the second fuel injector 6 such that a mixture of air, exhaust gas and the second fuel is provided into the combustion chamber 7 from the air intake system 4 during the intake phase.

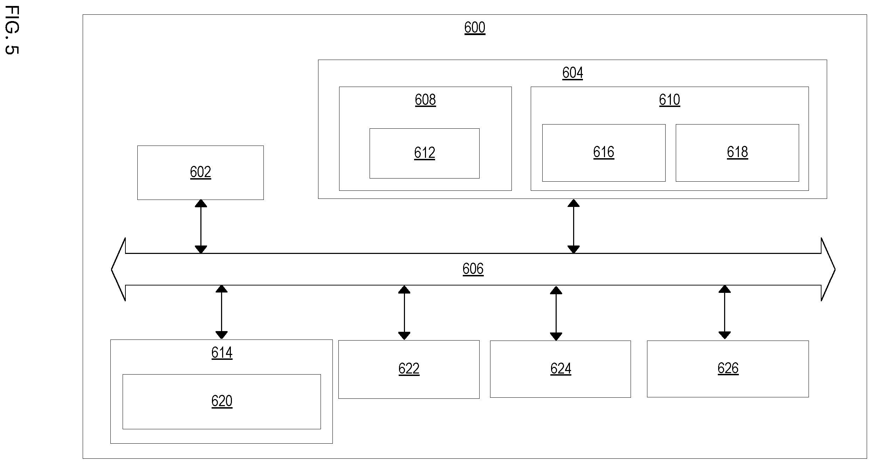

**FIG. 5** is a schematic diagram of a computer system 600 for implementing examples disclosed herein. The computer system 600 is adapted to execute instructions from a computer-readable medium to perform these and/or any of the functions or processing described herein. The computer system 600 may be connected (e.g., networked) to other machines in a LAN (Local Area Network), LIN (Local Interconnect Network), automotive network communication protocol (e.g., FlexRay), an intranet, an extranet, or the Internet. While only a single device is illustrated, the computer system 600 may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, processing circuitry, etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system 600 may comprise at least one computing device or electronic device capable of including firmware, hardware, and/or executing software instructions to implement the functionality described herein. The computer system 600 may include processing circuitry 602 (e.g., processing circuitry including one or more processor devices or control units), a memory 604, and a system bus 606. The computer system 600 may include at least one computing device having the processing circuitry 602. The system bus 606 provides an interface for system components including, but not limited to, the memory 604 and the processing circuitry 602. The processing circuitry 602 may include any number of hardware components for conducting data or signal processing or for executing computer code stored in memory 604. The processing circuitry 602 may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry 602 may further include computer executable code that controls operation of the programmable device.

The system bus 606 may be any of several types of bus structures that may further interconnect to a memory bus (with or without a memory controller), a peripheral bus, and/or a local bus using any of a variety of bus architectures. The memory 604 may be one or more devices for storing data and/or computer code for completing or facilitating methods described herein. The memory 604 may include database components, object code components, script components, or other types of information structure for supporting the various activities herein. Any distributed or local memory device may be utilized with the systems and methods of this description. The memory 604 may be communicably connected to the processing circuitry 602 (e.g., via a circuit or any other wired, wireless, or network connection) and may include computer code for executing one or more processes described herein. The memory 604 may include non-volatile memory 608 (e.g., read-only memory (ROM), erasable programmable read-only memory (EPROM), electrically erasable programmable read-only memory (EEPROM), etc.), and volatile memory 610 (e.g., random-access memory (RAM)), or any other medium which can be used to carry or store desired program code in the form of machine-executable instructions or data structures and which can be accessed by a computer or other machine with processing circuitry 602. A basic input/output system (BIOS) 612 may be stored in the non-volatile memory 608 and can include the basic routines that help to transfer information between elements within the computer system 600.

The computer system 600 may further include or be coupled to a non-transitory computer-readable storage medium such as the storage device 614, which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device 614 and other drives associated with computer-readable media and computer-usable media may provide non-volatile storage of data, data structures, computer-executable instructions, and the like.

Computer-code which is hard or soft coded may be provided in the form of one or more modules. The module(s) can be implemented as software and/or hard-coded in circuitry to implement the functionality described herein in whole or in part. The modules may be stored in the storage device 614 and/or in the volatile memory 610, which may include an operating system 616 and/or one or more program modules 618. All or a portion of the examples disclosed herein may be implemented as a computer program 620 stored on a transitory or non-transitory computer-usable or computer-readable storage medium (e.g., single medium or multiple media), such as the storage device 614, which includes complex programming instructions (e.g., complex computer-readable program code) to cause the processing circuitry 602 to carry out actions described herein. Thus, the computer-readable program code of the computer program 620 can comprise software instructions for implementing the functionality of the examples described herein when executed by the processing circuitry 602. In some examples, the storage device 614 may be a computer program product (e.g., readable storage medium) storing the computer program 620 thereon, where at least a portion of a computer program 620 may be loadable (e.g., into a processor) for implementing the functionality of the examples described herein when executed by the processing circuitry 602. The processing circuitry 602 may serve as a controller or control system for the computer system 600 that is to implement the functionality described herein.

The computer system 600 may include an input device interface 622 configured to receive input and selections to be communicated to the computer system 600 when executing instructions, such as from a keyboard, mouse, touch-sensitive surface, etc. Such input devices may be connected to the processing circuitry 602 through the input device
interface 622 coupled to the system bus 606 but can be connected through other interfaces, such as a parallel port, an Institute of Electrical and Electronic Engineers (IEEE) 1394 serial port, a Universal Serial Bus (USB) port, an IR interface, and the like. The computer system 600 may include an output device interface 624 configured to forward output, such as to a display, a video display unit (e.g., a liquid crystal display (LCD) or a cathode ray tube (CRT)). The computer system 600 may include a communications interface 626 suitable for communicating with a network as appropriate or desired.

The operational actions described in any of the exemplary aspects herein are described to provide examples and discussion. The actions may be performed by hardware components, may be embodied in machine-executable instructions to cause a processor to perform the actions, or may be performed by a combination of hardware and software. Although a specific order of method actions may be shown or described, the order of the actions may differ. In addition, two or more actions may be performed concurrently or with partial concurrence.

In the following, features and possible feature combinations of the present disclosure are presented as a list of Examples.

Example 1: A method for operating a dual fuel internal combustion engine (1), the dual fuel internal combustion engine (1) comprising:
- a cylinder (2) and a piston (3) at least partially accommodated by the cylinder (2), wherein the piston (3) is arranged to reciprocate within and relative to the cylinder (2) between a top dead center (TDC) and a bottom dead center (BDC), the cylinder and the piston at least partially defining a combustion chamber (7),
- an air intake system (4) arranged to provide air into the combustion chamber (7),
- a first fuel injector (5) arranged to inject a first fuel into the combustion chamber (7),
- a second fuel injector (6) arranged to inject a second fuel into the air intake system (4), wherein the method comprises:
- during and/or prior to an intake phase when the piston (3) is moving from the top dead center (TDC) to the bottom dead center (BDC), injecting (S1) the second fuel into the air intake system (4) by the second fuel injector (6) such that at least a mixture of air and the second fuel is provided into the combustion chamber (7) from the air intake system (4) during the intake phase, wherein the second fuel is an alcohol fuel, and
- during a compression phase following the intake phase when the piston (3) is moving from the bottom dead center (BDC) to the top dead center (TDC), injecting (S2) the first fuel into the combustion chamber (7) by the first fuel injector (5) in at least two separate fuel injections, comprising a main injection (MI) and at least one pilot injection (P1, P2), wherein the at least one pilot injection is injected prior to the main injection during the compression phase, wherein the first fuel is a fuel with a higher cetane number than the second fuel, and wherein the fuel injections by the first fuel injector (5) during the compression phase are initiated in a crank angle (α) window from -60° to 0° with respect to the top dead center (TDC).

Example 2: The method according to Example 1, wherein a compression ratio of the combustion chamber (7) is at least 16 to 1.

Example 3: The method according to any one of the preceding Examples, wherein the at least one pilot injection (P1, P2) comprises a first pilot injection (P1), and wherein the first pilot injection (P1) is initiated at a crank angle (α) with respect to the top dead center (TDC) which is in the range of -60° to -30°.

Example 4: The method according to any one of the preceding Examples, wherein the at least one pilot injection (P1, P2) comprises a second pilot injection (P2), and wherein the second pilot injection (P2) is initiated at a crank angle (α) with respect to the top dead center (TDC) which is in the range of -30° to 0°, such as -30° to -10°, or -20° to -10°.

Example 5: The method according to any one of the preceding Examples, wherein the dual fuel internal combustion engine (1) further comprises an air intake valve (41) arranged to selectively open and close fluid communication between the air intake system (4) and the combustion chamber (7), wherein the air intake valve (41) is located between the air intake system (4) and the combustion chamber (7) in an intended direction of flow of air from the air intake system (4) to the combustion chamber (7), and wherein injecting (S1) the second fuel into the air intake system (4) by the second fuel injector (6) comprises injecting (S1) the second fuel into the air intake system (4) upstream of the air intake valve (41) by the second fuel injector (6).

Example 6: The method according to any one of the preceding Examples, wherein the second fuel is any one of methanol, ethanol, butanol, or any mixture thereof.

Example 7: The method according to any one of the preceding Examples, wherein the first fuel is any one of diesel, bio-diesel, HVO-diesel, DME fuel, or any mixture thereof.

Example 8: The method according to any one of the preceding Examples, wherein the main injection is initiated by the first fuel injector (5) at a crank angle (α) with respect to the top dead center (TDC) which is in the range of -45° to 0°, such as -30° to 0°, or -15° to 0°.

Example 9: The method according to any one of the preceding Examples, wherein a total amount of first fuel injected during the main injection by the first fuel injector (5) corresponds to or is larger than a total amount of first fuel injected during one single pilot injection of the at least one pilot injection (P1, P2).

Example 10: The method according to any one of the preceding Examples, wherein a minimum total amount of first fuel injected during the main injection by the first fuel injector (5) is in the range of 2-10 mg.

Example 11: The method according to any one of the preceding Examples, wherein the first fuel injected during the main injection is injected by the first fuel injector (5) at an injection pressure in the range of 300-2500 bar, preferably 500-1500 bar.

Example 12: The method according to any one of the preceding Examples, wherein the at least one pilot injection (P1, P2) comprises a first pilot injection (P1), and wherein a first time period (T1) defined by an end of the first pilot injection (P1) and an initiation of the main injection (MI) is in the range of 1000-6000 µs.

Example 13: The method according to Example 12 or Example 3, wherein a total amount of first fuel injected during the first pilot injection (P1) is in the range of 2-8 mg.

Example 14: The method according to any one of the preceding Examples, wherein the at least one pilot injection (P1, P2) comprises a second pilot injection (P2), and wherein a second time period (T2) defined by an end of the second pilot injection (P2) and an initiation of the main injection (MI) is in the range of 100-800 µs, such as 200-500 µs or 300-500 µs.

Example 15: The method according to Example 14 or Example 4, wherein a total amount of first fuel injected during the second pilot injection (P2) is in the range of 1-5 mg, such as 2-3 mg.

Example 16: The method according to any one of Examples 3-4 or Examples 14-15, when also being dependent on any one of Examples 12-13, wherein a ratio between a total amount of first fuel injected during the first pilot injection (P1) and a total amount of first fuel injected during the second pilot injection (P2) is in a range of 1-4.

Example 17: The method according to any one of the preceding Examples, wherein the injections performed during the intake phase and the following compression phase define an injection phase, and wherein a total amount of second fuel injected during the injection phase amounts to at least 20 wt% of a total amount of first and second fuel injected during the injection phase, such as at least 25 wt% or at least 30 wt%.

Example 18: The method according to any one of the preceding Examples, wherein the first fuel is injected by the first fuel injector (5) at a higher injection pressure during each one of the main injection (MI) and the at least one pilot injection (P1, P2) than an injection pressure of the second fuel by the second fuel injector (6).

Example 19: The method according to any one of the preceding Examples, wherein the dual fuel internal combustion engine (1) is arranged to receive exhaust gas into the air intake system (4) from an exhaust gas recirculation system (EGR), and wherein the method comprises, during and/or prior to the intake phase, injecting (S1) the second fuel into the air intake system (4) by the second fuel injector (6) such that a mixture of air, exhaust gas and the second fuel is provided into the combustion chamber (7) from the air intake system (4) during the intake phase.

Example 20: A dual fuel internal combustion engine system (10) comprising a dual fuel internal combustion engine (1) and a control unit (12), wherein the dual fuel internal combustion engine (1) comprises:
- a cylinder (2) and a piston (3) at least partially accommodated by the cylinder (2), wherein the piston (3) is arranged to reciprocate within and relative to the cylinder (2) between a top dead center (TDC) and a bottom dead center (BDC), the cylinder and the piston at least partially defining a combustion chamber (7),
- an air intake system (4) arranged to provide air into the combustion chamber (7),
- a first fuel injector (5) arranged to inject a first fuel into the combustion chamber (7),
- a second fuel injector (6) arranged to inject a second fuel into the air intake system (4), wherein the control unit (12) is configured to:
- during and/or prior to an intake phase when the piston (3) is moving from the top dead center (TDC) to the bottom dead center (BDC), inject (S1) the second fuel into the air intake system (4) by the second fuel injector (6) such that at least a mixture of air and the second fuel is provided into the combustion chamber (7) from the air intake system (4) during the intake phase, wherein the second fuel is an alcohol fuel, and
- during a compression phase following the intake phase when the piston (3) is moving from the bottom dead center (BDC) to the top dead center (TDC), inject the first fuel into the combustion chamber (7) by the first fuel injector (5) in at least two separate fuel injections, comprising a main injection (MI) and at least one pilot injection (P1, P2), wherein the at least one pilot injection is injected prior to the main injection during the compression phase, wherein the first fuel is a fuel with a higher cetane number than the second fuel, and wherein the fuel injections by the first fuel injector (5) during the compression phase are initiated in a crank angle (α) window from -60° to 0° with respect to the top dead center (TDC).

Example 21: The dual fuel internal combustion engine system (10) according to Example 20, wherein the dual fuel internal combustion engine (1) further comprises an air intake valve (41) arranged to selectively open and close fluid communication between the air intake system (4) and the combustion chamber (7), wherein the air intake valve (41) is located between the air intake system (4) and the combustion chamber (7) in an intended direction of flow of air from the air intake system (4) to the combustion chamber (7), and wherein the second fuel injector (6) is arranged upstream of the air intake valve (41).

Example 22: The dual fuel internal combustion engine system (10) according to any one of Examples 20 or 21, wherein the dual fuel internal combustion engine system (10) further comprises an exhaust gas recirculation system (EGR) which is arranged to provide exhaust gas into the air intake system (4), wherein the control unit is configured to: during and/or prior to the intake phase, inject the second fuel into the air intake system by the second fuel injector such that a mixture of air, exhaust gas and the second fuel is provided into the combustion chamber from the air intake system during the intake phase.

Example 23: A vehicle (100) comprising a dual fuel internal combustion engine system (10) according to any one of the Examples 20-22.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A method for operating a dual fuel internal combustion engine (1), the dual fuel internal combustion engine (1) comprising:
- a cylinder (2) and a piston (3) at least partially accommodated by the cylinder (2), wherein the piston (3) is arranged to reciprocate within and relative to the cylinder (2) between a top dead center (TDC) and a bottom dead center (BDC), the cylinder and the piston at least partially defining a combustion chamber (7),
- an air intake system (4) arranged to provide air into the combustion chamber (7),
- a first fuel injector (5) arranged to inject a first fuel into the combustion chamber (7),
- a second fuel injector (6) arranged to inject a second fuel into the air intake system (4), wherein the method comprises:
- during and/or prior to an intake phase when the piston (3) is moving from the top dead center (TDC) to the bottom dead center (BDC), injecting (S1) the second fuel into the air intake system (4) by the second fuel injector (6) such that at least a mixture of air and the second fuel is provided into the combustion chamber (7) from the air intake system (4) during the intake phase, wherein the second fuel is an alcohol fuel, and
- during a compression phase following the intake phase when the piston (3) is moving from the bottom dead center (BDC) to the top dead center (TDC), injecting (S2) the first fuel into the combustion chamber (7) by the first fuel injector (5) in at least two separate fuel injections, comprising a main injection (MI) and at least one pilot injection (P1, P2), wherein the at least one pilot injection is injected prior to the main injection during the compression phase, wherein the first fuel is a fuel with a higher cetane number than the second fuel, and wherein the fuel injections by the first fuel injector (5) during the compression phase are initiated in a crank angle (α) window from -60° to 0° with respect to the top dead center (TDC).

2. The method according to claim 1, wherein a compression ratio of the combustion chamber (7) is at least 16 to 1.

3. The method according to any one of the preceding claims, wherein the at least one pilot injection (P1, P2) comprises a first pilot injection (P1), and wherein the first pilot injection (P1) is initiated at a crank angle (α) with respect to the top dead center (TDC) which is in the range of -60° to -30°.

4. The method according to claim 3, wherein a total amount of first fuel injected during the first pilot injection (P1) is in the range of 2-8 mg.

5. The method according to any one of the preceding claims, wherein the at least one pilot injection (P1, P2) comprises a second pilot injection (P2), and wherein the second pilot injection (P2) is initiated at a crank angle (α) with respect to the top dead center (TDC) which is in the range of -30° to 0°, such as -30° to -10°, or -20° to -10°.

6. The method according to claim 5, wherein a total amount of first fuel injected during the second pilot injection (P2) is in the range of 1-5 mg, such as 2-3 mg.

7. The method according to any one of the preceding claims, wherein the second fuel is any one of methanol, ethanol, butanol, or any mixture thereof.

8. The method according to any one of the preceding claims, wherein the first fuel is any one of diesel, bio-diesel, HVO-diesel, DME fuel, or any mixture thereof.

9. The method according to any one of the preceding claims, wherein the main injection is initiated by the first fuel injector (5) at a crank angle (α) with respect to the top dead center (TDC) which is in the range of -45° to 0°, such as -30° to 0°, or -15° to 0°.

10. The method according to any one of the preceding claims, wherein a minimum total amount of first fuel injected during the main injection by the first fuel injector (5) is in the range of 2-10 mg.

11. The method according to any one of claims 5-6, when also being dependent on any one of claims 3-4, wherein a ratio between a total amount of first fuel injected during the first pilot injection (P1) and a total amount of first fuel injected during the second pilot injection (P2) is in a range of 1-4.

12. The method according to any one of the preceding claims, wherein the injections performed during the intake phase and the following compression phase define an injection phase, and wherein a total amount of second fuel injected during the injection phase amounts to at least 20 wt% of a total amount of first and second fuel injected during the injection phase, such as at least 25 wt% or at least 30 wt%.

13. The method according to any one of the preceding claims, wherein the dual fuel internal combustion engine (1) is arranged to receive exhaust gas into the air intake system (4) from an exhaust gas recirculation system (EGR), and wherein the method comprises, during and/or prior to the intake phase, injecting (S1) the second fuel into the air intake system (4) by the second fuel injector (6) such that a mixture of air, exhaust gas and the second fuel is provided into the combustion chamber (7) from the air intake system (4) during the intake phase.

14. A dual fuel internal combustion engine system (10) comprising a dual fuel internal combustion engine (1) and a control unit (12), wherein the dual fuel internal combustion engine (1) comprises:
- a cylinder (2) and a piston (3) at least partially accommodated by the cylinder (2), wherein the piston (3) is arranged to reciprocate within and relative to the cylinder (2) between a top dead center (TDC) and a bottom dead center (BDC), the cylinder and the piston at least partially defining a combustion chamber (7),
- an air intake system (4) arranged to provide air into the combustion chamber (7),
- a first fuel injector (5) arranged to inject a first fuel into the combustion chamber (7),
- a second fuel injector (6) arranged to inject a second fuel into the air intake system (4), wherein the control unit (12) is configured to:
- during and/or prior to an intake phase when the piston (3) is moving from the top dead center (TDC) to the bottom dead center (BDC), inject (S1) the second fuel into the air intake system (4) by the second fuel injector (6) such that at least a mixture of air and the second fuel is provided into the combustion chamber (7) from the air intake system (4) during the intake phase, wherein the second fuel is an alcohol fuel, and
- during a compression phase following the intake phase when the piston (3) is moving from the bottom dead center (BDC) to the top dead center (TDC), inject the first fuel into the combustion chamber (7) by the first fuel injector (5) in at least two separate fuel injections, comprising a main injection (MI) and at least one pilot injection (P1, P2), wherein the at least one pilot injection is injected prior to the main injection during the compression phase, wherein the first fuel is a fuel with a higher cetane number than the second fuel, and wherein the fuel injections by the first fuel injector (5) during the compression phase are initiated in a crank angle (α) window from -60° to 0° with respect to the top dead center (TDC).

15. A vehicle (100) comprising a dual fuel internal combustion engine system (10) according to claim 14.
